# FASCICULE DE BREVET EUROPEEN

(11) **EP 1 450 662 B1**
(45) Date de publication et mention de la délivrance du brevet: **21.06.2006**
(21) Numéro de dépôt: 02801083.3
(22) Date de dépôt: 29.11.2002
(51) Int. Cl.: A47L 9/16, B04C 5/185

(54) **DISPOSITIF DE SEPARATION DES DECHETS POUR ASPIRATEUR**
ABFALLTRENNVORRICHTUNG FÜR STAUBSAUGER
WASTE SEPARATING DEVICE FOR VACUUM CLEANER

(30) Priorité: 05.12.2001 FR 0115715
(43) Date de publication de la demande: 01.09.2004
(73) Titulaire: SEB SA, 69130 Ecully (FR)
(72) Inventeur: DAVID, Fabien, F-27940 Notre Dame de l'Isle (FR); DANCER, Paul, F-69540 Irigny (FR)
(74) Mandataire: Kiehl, Hubert
(86) Numéro de dépôt international: PCT/FR2002/004111
(87) Numéro de publication internationale: WO 2003/047412

(56) Documents cités:
- EP-A- 0 489 468
- WO-A-01/14066
- WO-A-96/27446
- DE-A- 10 000 984
- DE-A- 19 704 468
- US-B1- 6 260 234
- PATENT ABSTRACTS OF JAPAN vol. 017, no. 100 (C-1030), 26 février 1993 (1993-02-26) -& JP 04 288111 A (MATSUSHITA ELECTRIC IND CO LTD), 13 octobre 1992 (1992-10-13)

## Description

La présente invention concerne les appareils récupérateurs de déchets de type aspirateurs, et plus particulièrement ceux utilisant une séparation des déchets par centrifugation.

Il est connu, dans les aspirateurs, de séparer les déchets aspirés du flux d'air par la mise en rotation dudit flux, les déchets les plus lourds étant alors séparés du flux d'air par centrifugation.

Le document WO 96/27446 décrit un dispositif de séparation des déchets où l'air entre tangentiellement dans un réceptacle cylindrique au centre duquel est logé un filtre relié au groupe d'aspiration. Les déchets entraînés en rotation dans ce réceptacle sont séparés du flux d'air initial et tombent au fond dudit réceptacle.

La présence du lieu de stockage des déchets dans la chambre de séparation desdits déchets génère un encombrement assez conséquent du dispositif. De plus, comme mentionné dans ledit document, un fonctionnement optimal du dispositif nécessite la présence de zones d'arrêt de la rotation des déchets, afin qu'ils ne soient pas ré-entraînés vers la zone de filtration.

Par le document EP 0 489 468, il est également connu une disposition en série de deux systèmes de filtration, le premier système permettant d'arrêter les déchets les plus gros par un dispositif de tamis filtrant, le deuxième système étant de type cyclonique en proposant une chambre cylindrique de séparation, de taille relativement faible au centre de laquelle est logé un conduit de refoulement de l'air épuré. Cette disposition est cependant encombrante et les deux systèmes de filtration forment une architecture relativement complexe. Un dispositif de séparation et de collecte des déchets selon le préambule de la revendication 1 est décrit dans JP 04 288 111.

Un des buts de la présente invention est de remédier aux inconvénients de l'art antérieur en diminuant notamment l'encombrement du dispositif général de filtration par centrifugation, sans diminuer l'efficacité de séparation des déchets, tout en simplifiant l'architecture.

Ce but est atteint à l'aide d'un dispositif principal de séparation et de collecte des déchets entraînés par un flux d'air généré par un groupe d'aspiration d'un aspirateur, ledit dispositif comprenant un conduit d'entrée d'air débouchant selon une direction tangentielle dans une chambre de séparation des déchets définissant un volume interne ayant sensiblement la forme d'un cylindre, dans la partie centrale de ladite chambre est agencée au moins une ouverture débouchant sur un conduit en liaison avec le groupe d'aspiration, ladite chambre possédant un canal d'évacuation des déchets selon une direction radiale, ledit canal étant relié à un bac étanche collecteur des déchets centrifugés, le canal d'entrée d'air et le canal d'évacuation des déchets étant agencés sensiblement à la même hauteur dans la chambre de séparation des déchets, caractérisé en ce que la section diamétrale de la chambre est comprise entre deux fois et dix fois la plus petite section des canaux d'amenée des déchets depuis le suceur.

Par le terme section diamétrale, on entend la section de la chambre prise selon son diamètre.

En effet, en fonctionnement, le flux d'air est centrifugé à son entrée dans la chambre de séparation, et suit donc un mouvement circulaire en prenant la forme d'une veine de centrifugation dont la section est au plus égale à la moitié de la section de la chambre, prise selon son diamètre.

Afin d'offrir une compacité assez inhabituelle pour un dispositif principal de séparation des déchets tout en gardant une vitesse importante au flux d'air, il est souhaitable que la section de cette veine de circulation du flux d'air soit comprise entre une fois et cinq fois la section du conduit d'entrée.

De plus, le flux étant amené, selon les cas, à effectuer plus d'un tour de la chambre de séparation, au flux entrant vient s'ajouter le flux résiduel déjà présent dans la chambre. Il est donc important d'en tenir compte lors du dimensionnement de ladite chambre. Enfin, en n'augmentant que très peu la section diamétrale de la chambre par rapport à la section du conduit d'entrée, on limite la perturbation du flux à son entrée dans la chambre de séparation.

De plus, par ce dispositif, on peut notamment diminuer la zone de centrifugation dans la direction transversale à la direction d'introduction des déchets, c'est à dire que si les déchets sont introduits horizontalement, on diminue la hauteur de la chambre de séparation. Cette réduction de l'encombrement est possible par l'isolement physique du réceptacle de stockage des déchets de la chambre active de séparation, relié uniquement à ladite chambre par un canal de liaison. Ceci permet également une plus grande liberté sur la forme du réceptacle de stockage et son implémentation, car il n'est alors plus indispensable que ce dernier soit cylindrique.

Par ailleurs, en diminuant la hauteur de la chambre de séparation, on diminue les pertes de charge associées au dispositif.

Avantageusement, au moins un moyen de filtration est disposé dans la partie centrale de la chambre et sépare le volume interne de ladite chambre du conduit en liaison avec le groupe d'aspiration, ce qui permet de localiser davantage de déchets dans la chambre de séparation, réduisant ainsi les différents lieux de stockage des déchets.

Selon les configurations envisagées, les moyens de filtration peuvent prendre différentes formes et se présenter, soit sous la forme d'une grille, soit sous la forme d'un filtre, d'une mousse, d'un sac,... Plusieurs formes peuvent être associées pour constituer lesdits moyens de filtration.

Avantageusement, l'extrémité du canal d'évacuation des déchets reliée à la chambre de séparation est de hauteur sensiblement égale à celle de la chambre, n'offrant ainsi aucune zone d'arrêt des déchets sur les parois délimitant l'ouverture du canal d'évacuation des déchets.

Avantageusement, la section du conduit d'entrée est sensiblement circulaire et de diamètre compris entre 25 mm et 35 mm, ce qui reste très proche des valeurs couramment utilisées dans les différentes tubulures des aspirateurs actuels, toujours dans un souci de garder une vitesse élevée du flux d'air à son entrée dans la chambre de séparation.

Il est en effet important de souligner que le dispositif de séparation n'est réellement efficace que pour des vitesses d'air dans la chambre supérieure à 30 m/s et préférentiellement supérieure à 50 m/s.

Avantageusement, le conduit d'entrée d'air dans la chambre de séparation possède une réduction de sa section au niveau de sa liaison aéraulique avec ladite chambre de séparation, ce qui permet d'accélérer l'air à son entrée dans la chambre de séparation.

Plus précisément, la section du conduit d'entrée d'air est comprise entre 1 et 2 fois la plus petite section d'amenée des déchets depuis le suceur d'aspiration. Tel qu'il a été rappelé précédemment, le diamètre interne des tubulures reliant le suceur au bâti de l'aspirateur étant généralement compris, dans une majorité d'aspirateur traîneau, entre 25 mm et 30 mm, la section du canal d'entrée d'air dans la chambre de séparation est alors comprise entre 490 et 1400 mm² environ.

Ainsi, en proposant une section d'entrée d'air dans la chambre de séparation de même valeur, voire de valeur inférieure à la section d'amenée des déchets depuis le suceur, on permet de garder une vitesse importante aux déchets, voire une accélération, à leur entrée et par conséquent à l'intérieur de la chambre de séparation.

Selon un premier mode de réalisation, l'un des moyens de filtration est plat en étant logé à l'extrémité d'un conduit lié au groupe d'aspiration principal. Cette disposition est intéressante pour réduire encore davantage la taille du dispositif de séparation.

Selon un second mode de réalisation, l'un des moyens de filtration est hémisphérique, ce qui permet de garder une forme compacte du dispositif tout en présentant une taille de filtre plus importante que celle d'un filtre plan.

Dans une variante de mise en oeuvre de ces deux modes de réalisation, le dispositif de séparation des déchets comporte deux moyens de filtration disposés en vis-à-vis, en relation avec un ou deux conduit(s) lié(s) au groupe d'aspiration principal, ce qui permet d'augmenter la surface de filtration et l'efficacité de séparation des déchets, en scindant le flux d'air en deux.

Selon un troisième mode de réalisation, au moins un moyen de filtration est cylindrique.

La forme cylindrique donnée au moyen de filtration permet de limiter les turbulences du flux d'air dans la chambre de séparation, ainsi que les zones de rétention des déchets dans la chambre.

Préférentiellement, l'un des moyens de filtration s'étend depuis le fond de la chambre de séparation jusqu'à la partie supérieure de ladite chambre, ce qui permet d'offrir une surface de filtration importante.

Selon un quatrième mode de réalisation, la chambre cylindrique de séparation est sous la forme d'un tore dont la face cylindrique intérieure comporte une ouverture débouchant sur un conduit en liaison avec un groupe d'aspiration.

La réalisation d'une telle chambre, en présentant une face intérieure rigide, permet de délimiter la chambre de séparation indépendamment du moyen de filtration, ce qui permet une plus grande latitude au niveau de la réalisation du dispositif.

Avantageusement, un moyen de filtration est disposé au niveau de l'ouverture de la face cylindrique intérieure, dans le souci d'arrêter un maximum de déchets dans un endroit donné.

Avantageusement, la section diamétrale du tore est comprise entre 1 fois et 4 fois la plus petite section des canaux d'amenée des déchets depuis le suceur, permettant de garder une vitesse d'air importante, tel que précédemment expliqué.

Avantageusement, le moyen de filtration est une grille dont la maille est inférieure à 60 µm, permettant de protéger toute la partie en aval, comprenant le groupe d'aspiration principal avec, éventuellement un filtre finisseur.

Avantageusement, la face cylindrique intérieure est prolongée au-delà de la hauteur de la chambre de séparation, le cylindre ainsi caractérisé étant fermé par des parois sensiblement horizontales, définissant un volume à l'intérieur duquel est logé un second moyen de filtration en liaison avec le groupe d'aspiration principal.

La disposition de deux moyens de filtration dans cet espace permet, d'une part, d'augmenter la compacité du dispositif, tout en localisant, d'autre part, dans un même lieu, les moyens de filtration et de collecte des déchets relatifs au dispositif de séparation. Par ailleurs, en disposant ces deux moyens de filtration suffisamment éloignés l'un de l'autre au centre du tore, on dégage un volume important de stockage des déchets fins entre ces deux moyens de filtration.

Avantageusement, le second moyen de filtration est un filtre cylindrique s'étendant sur sensiblement toute la hauteur du cylindre, permettant ainsi d'augmenter la surface de filtration, ce qui retarde le colmatage dudit filtre.

En variante de réalisation, le second moyen de filtration se présente sous la forme d'un filtre disposé dans un logement situé sous la chambre de séparation et en communication aéraulique avec celle-ci. Une telle disposition permet de simplifier l'architecture de l'appareil tout en offrant une plus grande latitude quant à la réalisation du filtre.

Avantageusement, le filtre présente une surface supérieure à 0,2 m², essentiellement par augmentation de son diamètre et/ou de sa hauteur, voire par l'utilisation d'un filtre plissé.

Dans une version améliorée de l'un des modes de réalisation évoqué, au moins l'un des moyens de filtration peut être régénéré, ce qui facilite l'entretien du dispositif. Par le terme régénéré, on sous-entend que le moyen peut subir un traitement pour retrouver ses fonctions et ses qualités proches de celles d'origine. De tels traitements englobent le lavage, le secouage du filtre,...

Avantageusement, afin de faciliter une telle régénération, le filtre est constitué d'un support fibreux recouvert d'une membrane poreuse en PTFE. Un tel filtre peut donc être nettoyé par un simple lavage sous l'eau.

La présente invention sera mieux comprise à l'aide de la description qui va suivre, en référence aux figures annexées, parmi lesquelles :
- les figures 1 a et 1b présentent une vue en coupe, respectivement de dessus selon B-B et de profil selon la coupe A-A, du principe général de la chambre de séparation des déchets selon l'invention,
- les figures 2, 3 et 6 présentent des variantes de conception,
- les figures 4a et 4b présentent les deux parties isolées d'un ensemble de séparation et de collecte des déchets selon un premier mode de réalisation,
- la figure 5 montre le dispositif de séparation et de collecte selon le premier mode de réalisation, dans une vue en perspective,
- la figure 7 présente une vue en perspective d'un second mode de réalisation de la présente invention,
- la figure 8 est une vue en coupe selon l'axe L-L de la figure 7,
- la figure 9 est une vue en perspective de la vue coupe présentée figure 8,
- la figure 10 est une vue de dessus de ce second mode de réalisation,
- la figure 11 est une vue de dessus schématique d'une amélioration du dispositif selon l'invention.
- la figure 12 représente une variante avantageuse de réalisation de l'invention.

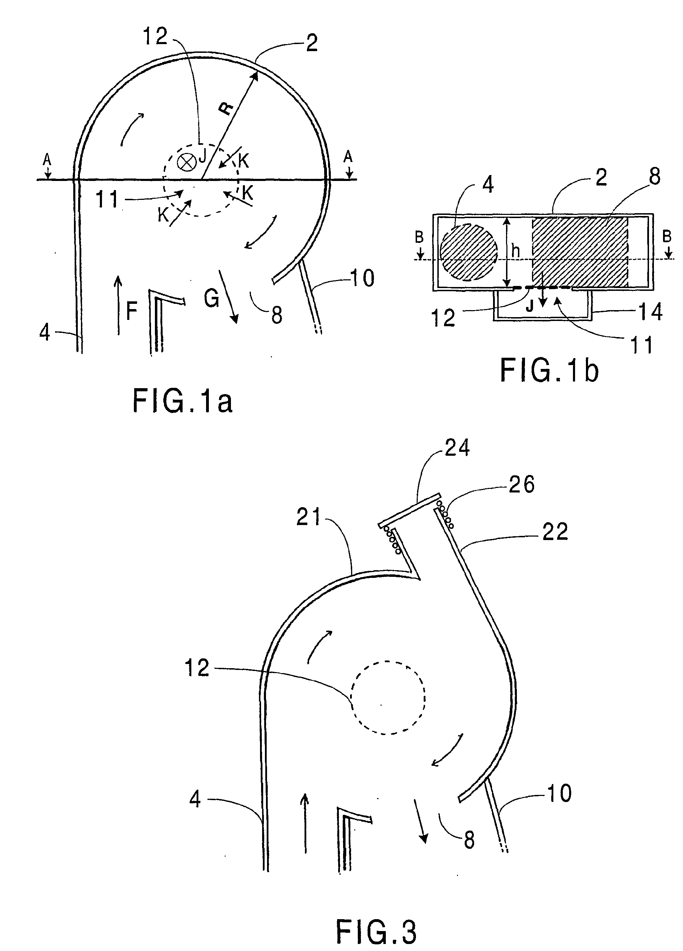

Selon un schéma de principe illustré aux figures 1a et 1b, la présente invention consiste en une chambre 2 sensiblement circulaire, de rayon R et de hauteur h. Un conduit 4 d'amenée des déchets arrive tangentiellement dans cette chambre.

Au centre de ladite chambre est ménagé un orifice de sortie d'air débouchant dans un conduit en liaison avec un groupe principal d'aspiration. Un filtre 12 est disposé au niveau de l'orifice 11, entre le conduit et la chambre de séparation.

Cette dernière est également en liaison aéraulique avec un réceptacle de récupération 10, par un petit conduit 8 formant une ouverture radiale.

Cette ouverture est en effet sensiblement radiale afin de limiter les remous dans le bac. Elle peut posséder une légère composante tangentielle, selon le sens de rotation des déchets, afin de faciliter l'introduction des déchets dans ledit bac.

Le conduit 4 d'arrivée des déchets est, selon une configuration standard, de forme cylindrique et est typiquement constitué d'un tube similaire aux tubes permettant la liaison du suceur d'aspirateur au corps de l'aspirateur.

En variante, ce conduit peut présenter une section plus faible que celle des tubes de liaison afin d'accélérer le flux d'air entrant.

Une des particularités du dispositif est, d'une part, de présenter un bac de collecte 10 des déchets séparable et indépendant de la chambre de séparation 2. D'autre part, la chambre de séparation des déchets présente la caractéristique d'être de faible hauteur par rapport à son rayon R. En effet, la hauteur h de la chambre est voisine du diamètre du conduit d'entrée 4 dans la chambre de séparation, soit entre 25 à 35 mm, alors que le rayon R de la chambre de séparation est, de préférence, compris entre 40 mm et 100 mm.

Cette particularité permet d'éviter une trop grande perte de vitesse des déchets centrifugés, qui réduirait l'efficacité de leur séparation du flux d'air principal.

Par suite, le conduit 8 de sortie des déchets vers le bac collecteur est situé au même niveau, dans la chambre de séparation, que le conduit d'entrée 4. Cette notion est bien évidemment à considérer en disposant la hauteur h de la chambre verticalement, bien que, selon la configuration de l'appareil, ladite chambre puisse occuper différentes positions autres qu'horizontale.

En fonctionnement, l'air chargé de déchets arrive tangentiellement par le conduit 4 selon la direction F. Les déchets les plus lourds, mis en rotation sont centrifugés. L'air ressort au centre de ladite chambre selon la direction J, après son passage au travers du filtre 12 selon la direction K. L'air filtré est ensuite acheminé vers un groupe principal d'aspiration par le conduit 14.

Les poussières et déchets étant plaqués contre la paroi de la chambre de séparation, ne peuvent effectuer comme l'air un virage au centre pour sortir. Leur rotation sur la face interne de la paroi de délimitation de la chambre les amène vers l'ouverture radiale par laquelle ils sont évacués vers le réceptacle de récupération 10, selon la direction G.

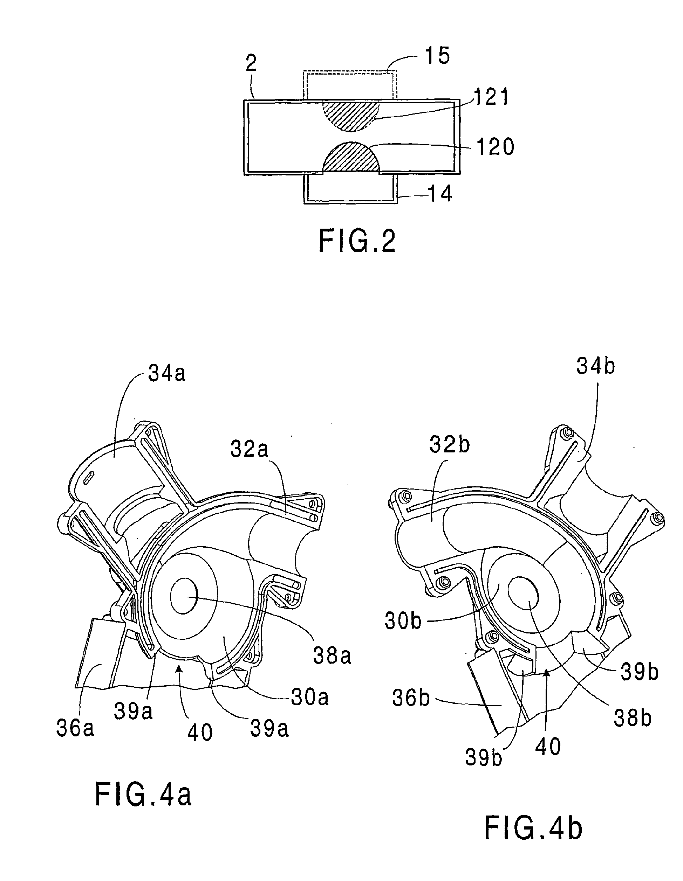

Le filtre 12 peut revêtir plusieurs variantes de réalisation. Il peut s'agir d'une simple grille plane, telle que présentée figure 1b. Ce filtre peut être également une grille hémisphérique 120, comme le montre la figure 2. La maille de la grille peut être plus ou moins large.

Sur la figure 2 est également présentée, en pointillés, une variante de réalisation consistant à disposer une seconde grille 121 en vis-à-vis de la première 120, ladite seconde grille étant en liaison avec un conduit aéraulique 15 lié au groupe d'aspiration. Afin de simplifier la construction, les deux conduits 14, 15 se rejoignent rapidement pour ne former qu'une seule liaison aéraulique avec le groupe d'aspiration.

Ainsi, l'air ressort de la chambre de séparation selon deux directions opposées sur l'axe, approximativement en partie centrale de ladite chambre.

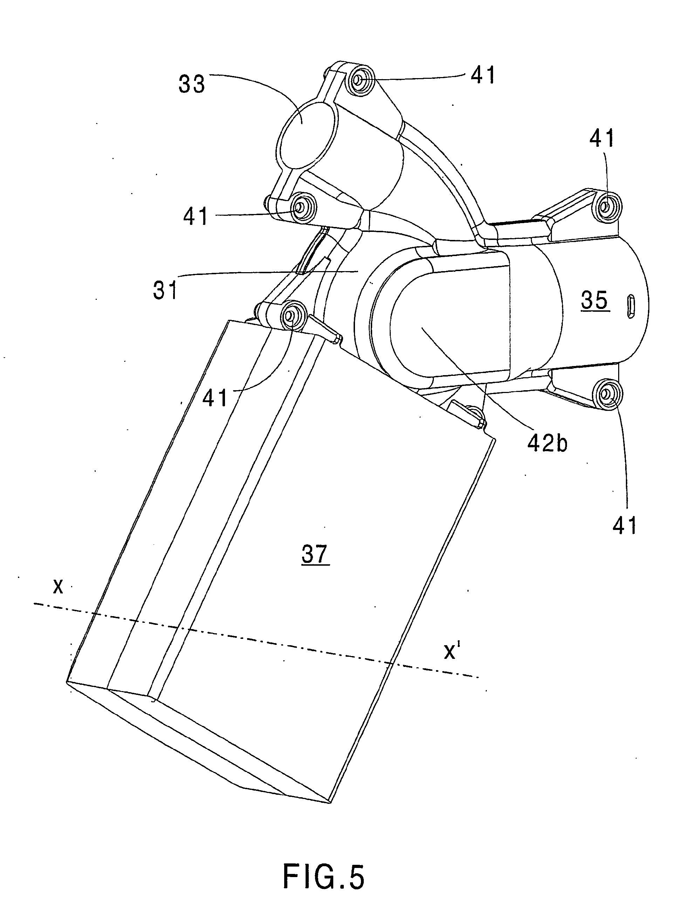

Les figures 4a, 4b et 5 présentent une réalisation plus concrète de cette dernière configuration.

Selon cette réalisation, l'ensemble formé par la chambre de séparation des déchets 31, le bac de collecte des déchets séparés 37 ainsi que les conduits d'amenée des déchets 33 et de sortie d'air 35 sont constitués par deux sous-ensembles issus de moulage, ces deux sous-ensembles étant sensiblement identiques et assemblés, de manière étanche l'un à l'autre par tout moyen connu, tel le vissage, ou, comme représenté, par emboîtement élastique 41 de type tenon-mortaise, de telle manière que les deux sous-ensembles puissent être séparés facilement en vue de leur nettoyage.

Chaque sous-ensemble est présenté, vu de l'intérieur, respectivement aux figures 4a et 4b.

Ainsi, les portions 30a, 30b définissent la chambre de séparation 31 sensiblement cylindrique. Au centre de chacune d'elle est ménagée une ouverture 38a, 38b en liaison respective avec les parties 34a, 34b définissant le conduit de sortie d'air 35. Au niveau de chaque orifice est disposé un filtre et/ou une grille, non représenté(e), tel qu'il a été précédemment expliqué.

Le conduit d'entrée d'air 33 est défini par les portions 32a, 32b débouchant tangentiellement dans la chambre de séparation 31. Les déchets séparés par centrifugation sont recueillis dans le réceptacle 37 constitué par les deux éléments 36a, 36b. Le réceptacle 37 est relié de façon aéraulique à la chambre de séparation par un conduit 40 délimité par des parois 39a, 39b orientées de manière sensiblement radiale par rapport à la chambre de séparation 31. Ces parois 39a, 39b pénètrent légèrement dans le réceptacle 37 en formant une trappe qui empêche la poussière de ressortir.

Les deux sous-ensembles, sensiblement symétriques en présentant un joint d'assemblage sensiblement plan, montrent clairement que le conduit d'entrée 33 du flux d'air aspiré est au même niveau que le conduit 40 de sortie des déchets séparés, par rapport à la hauteur de la chambre de séparation telle qu'elle a été précédemment définie.

Afin de diminuer davantage l'encombrement du dispositif, le conduit de sortie d'air 35 présente, immédiatement après chaque orifice 38a, 38b, un coude sensiblement à 90°, de telle sorte que le conduit de sortie d'air se retrouve sensiblement parallèle au conduit d'entrée 33. Sur la figure 5 est présenté le coude 42b de la partie 34b du conduit 35.

Un tel dispositif de séparation présente donc un encombrement réduit, notamment dans la direction x-x' de la figure 5, direction perpendiculaire au plan de centrifugation. Cette réduction de l'encombrement du dispositif est accentuée par le faible diamètre de la chambre de séparation qui est possible par la faible section de passage de l'air dans la chambre, garant d'une vitesse élevée du flux d'air dans ladite chambre.

Ce diamètre est également conditionné par la section des tubulures d'amenée des déchets dans la chambre de séparation.

Lorsqu'une grille est utilisée, elle est associée à un moyen de filtration ou de retenue des déchets fins. Ce moyen peut être disposé immédiatement après la grille, ou bien plus en aval du circuit aéraulique, proche du moteur. Ce moyen peut être un filtre, une mousse, un sac,...

Afin de diminuer la turbulence et le bruit, il peut être disposé, en sortie d'air, après le filtre ou la grille, une volute pour orienter et faire tourner le flux d'air selon une portion de spirale.

La figure 3 présente une variante avantageuse de réalisation dans laquelle la chambre 21 de séparation présente un conduit annexe 22 d'entrée d'air régulée par une soupape 24 agencée à l'extrémité du conduit 22 par un moyen de rappel 26. Ce dispositif d'entrée d'air annexe permet de mieux contrôler le fonctionnement du séparateur dans des utilisations extrêmes, notamment lorsque l'utilisateur bouche soudainement l'entrée d'air principal menant à la chambre de séparation. Cette soupape peut toutefois être remplacée par une deuxième entrée d'air chargé de déchets, lorsque par exemple plusieurs zones d'aspiration sont prévues.

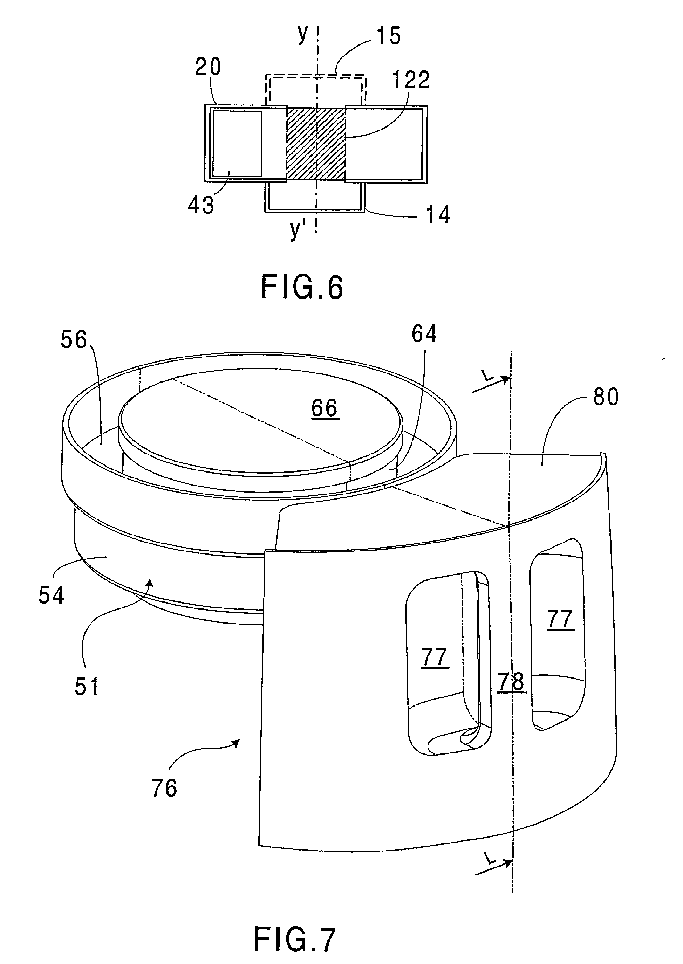

Dans la variante présentée schématiquement figure 6, la chambre de séparation 20 est reliée à un ou deux conduits 14, 15 de sortie d'air vers le groupe principal d'aspiration tel qu'expliqué figure 2. Ce ou ces conduits sont séparés de la chambre de séparation 20 par un filtre cylindrique 122 disposé au centre de la chambre, sur sensiblement toute la hauteur de ladite chambre. Cette disposition permet d'augmenter la surface du filtre, ce qui réduit notamment les risques de colmatage.

Avantageusement, la section 43 d'entrée de l'air dans la chambre de séparation est différente d'une section circulaire. Ladite section peut être rectangulaire, telle que représentée, voire carrée, en trapèze, ovale, .... Le choix d'une section rectangulaire, plutôt qu'une section circulaire, est de pouvoir écarter au maximum les déchets de l'axe y-y' et donc du filtre central.

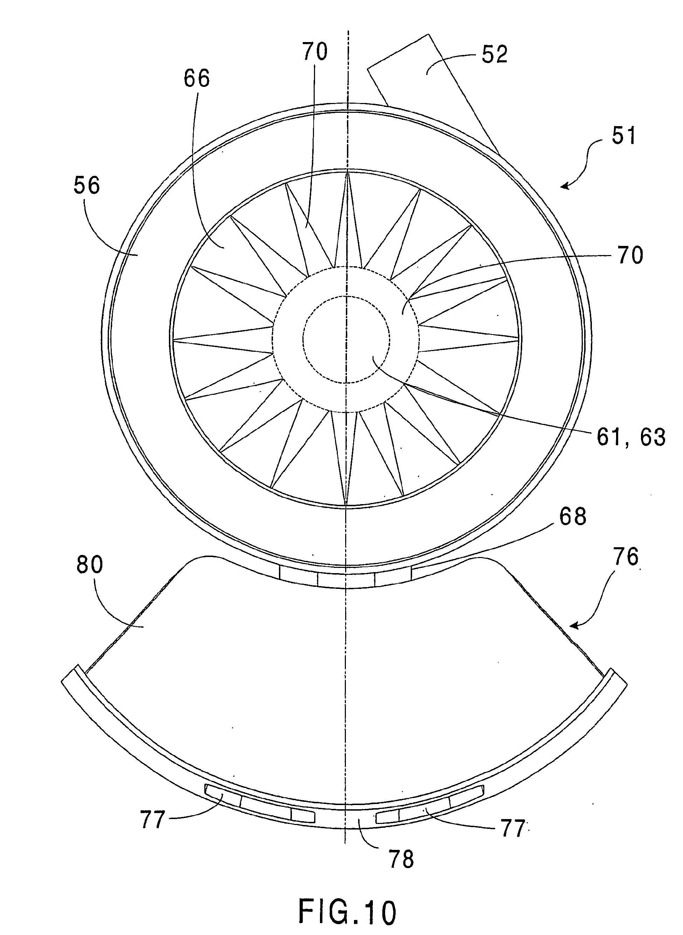

Les figures 7 à 11 présentent une seconde réalisation de la présente invention sur le concept de la figure 6.

Ainsi, le dispositif de séparation 51 des déchets comporte un conduit d'entrée d'air 52 débouchant dans une chambre de séparation 53 s'apparentant à un tore de section diamétrale rectangulaire. Cette section de passage du flux est délimitée par une paroi circulaire extérieure 54, une paroi circulaire intérieure 55, une paroi supérieure 56, ainsi qu'une paroi de fond 57.

Selon l'exemple proposé, la paroi de fond 57 et la paroi extérieure 54 font partie d'une même pièce présentant un profil extérieur en L. Cette pièce comporte en outre une paroi de fond 62. De façon similaire et complémentaire, la paroi supérieure 56 et la paroi intérieure 55 font partie d'une même pièce en formant un L. La paroi de fond 60 de celle-ci est configurée pour venir s'emboîter dans la paroi de fond 62 en creux de la pièce précédente, de telle manière à composer facilement le tore 53, les formes en L des deux pièces venant, l'une sur l'autre, constituer la section rectangulaire du tore. De plus, un épaulement 58 améliore la formation du tore en proposant une surface d'appui de la paroi supérieure 56.

Une telle constitution et disposition des pièces permettent ainsi un démontage aisé et un entretien par lavage des pièces simple et rapide, puisque l'ensemble des surfaces constituant la chambre de séparation est facilement accessible.

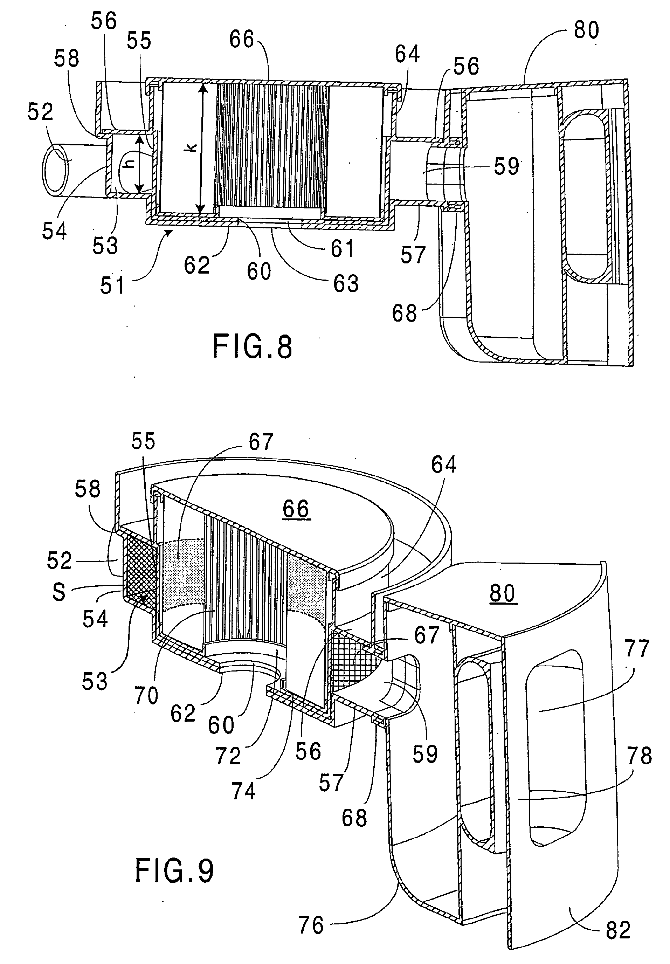

Telle que présenté, notamment par des hachures figure 9, la section rectangulaire S de la chambre de séparation est voisine de la plus petite section d'amenée des déchets depuis le suceur, afin de conserver une vitesse importante du flux d'air. A titre d'exemple, la section présentée est rectangulaire, de dimension 25 mm par 35 mm, soit une section de l'ordre de 875 mm², pour une section minimale d'amenée des déchets de 490 mm², correspondant à un tube dont le diamètre intérieur est de 25 mm. Le rapport entre la section de la chambre de séparation et la plus petite section d'amenée des déchets depuis le suceur peut s'étendre de 1 à 4 fois, selon les configurations des dispositifs utilisés.

Selon l'exemple proposé, la paroi intérieure 55 est ouverte sur l'espace intérieur de ladite paroi, par l'intermédiaire d'une grille de filtration 67 qui est accolée à ladite paroi par tout moyen connu.

La liaison aéraulique au groupe d'aspiration principal est assurée par des ouvertures 61, 63 sensiblement coïncidentes ménagées respectivement dans les bases 60, 62 des pièces formant la chambre de séparation et débouchant sur un conduit non représenté, en liaison avec le groupe d'aspiration.

La paroi intérieure 55 est avantageusement prolongée verticalement par une paroi 64. Le cylindre ainsi constitué est fermé en partie supérieure par un couvercle 66 emboîté sur la paroi 64 de façon connue en soi.

Dans l'espace défini par la paroi intérieure 55, la paroi de fond 60 et le couvercle 66 est disposé un filtre cylindrique 70 soutenue par une embase 72 prenant appui sur la base 60. Ce filtre cylindrique entoure les ouvertures 61, 63 des bases 60, 62. Des moyens d'étanchéité évitent que l'air pénétrant par la grille de filtration 67 ne passent au travers des ouvertures 61, 63 sans être préalablement filtré par le filtre cylindrique 70.

Ces moyens d'étanchéité peuvent revêtir différentes formes, tel un joint torique disposé sous l'embase 72, et/ou par la nature même de l'embase,...

De tels moyens d'étanchéité sont également présents entre la paroi supérieure 56 et l'épaulement 58, ainsi qu'entre les bases 60 et 62 et entre la paroi intérieure 55 et la paroi de fond 57.

L'embase 72 possède des extensions radiales 74 dont les dimensions coïncident avec le diamètre de la face 55, de sorte que le positionnement du filtre 70 est automatiquement centré par rapport à la face cylindrique 55, grâce aux dites extensions radiales. Ces dernières peuvent être continues en constituant un disque. Les moyens d'étanchéité peuvent être disposés au niveau des extensions radiales.

Avantageusement, tel que représenté, le filtre 70 s'étend sensiblement sur toute la hauteur k du cylindre délimité par les parois 55, 64, et le couvercle 66.

En augmentant sensiblement la hauteur pour le logement du filtre, on permet d'augmenter la surface de filtration, tout en gardant une chambre de séparation de faible volume ce qui garantit une bonne efficacité dans la séparation des déchets.

Un tel filtre peut offrir une surface de filtration supérieure à 0,20 m². Une telle surface peut être obtenue par l'utilisation de filtres plissés qui permettent au dispositif de garder une forme compacte.

La grille devant le filtre présente une surface de l'ordre de 100 cm².

La sortie des déchets séparés dans la chambre 53 est assurée par une ouverture radiale 59 en liaison avec un bac récupérateur 76 par l'intermédiaire d'un conduit 68. Ce bac est amovible de la chambre de séparation. Il est sensiblement vertical, comporte une poignée 78 pouvant recouvrir plusieurs modes de réalisation. Selon l'exemple proposé, une structure d'habillage 82 prend appui sur l'arrière du bac récupérateur 76. Cette structure comporte des évidements 77 façonnant ainsi la poignée 78.

Le bac récupérateur 76 dispose d'un couvercle 80. Ce dernier est prolongé jusqu'à la structure d'habillage 82. Ce couvercle peut être amovible ou articulé, de manière à permettre l'évacuation simple et aisée des déchets lorsque l'utilisateur désire vider les déchets contenus dans le bac.

En fonctionnement, l'utilisateur met en marche le groupe d'aspiration principal, et aspire les déchets sur le sol à nettoyer à l'aide d'un conduit terminé ou non par un suceur et relié à la chambre de séparation 53 par le conduit 52. Le flux d'air chargé de déchets pénètre alors à l'intérieur de la chambre de séparation avec une vitesse proche de 60 m/s, vitesse élevée obtenue par la configuration dimensionnelle des différentes parties du dispositif.

Les déchets les plus lourds sont alors séparés du flux d'air principal, par effet centrifuge, mais également par la grille 67. Ils pénètrent alors, par l'ouverture 59 suivie du conduit 68, dans le bac de collecte 76 où ils sont stockés.

L'air pénétrant à travers la grille 67 est alors filtré par le filtre cylindrique 70 qui est un filtre permettant une filtration élevée afin d'arrêter les poussières les plus fines. L'air épuré est alors dirigé vers le groupe d'aspiration par les ouvertures 61, 63 des bases 60, 62.

En variante, des barreaux en forme d'ailettes peuvent être disposés en amont de la grille 67, selon la direction du flux d'air, permettant d'augmenter la qualité de filtration en diminuant les pertes de charge.

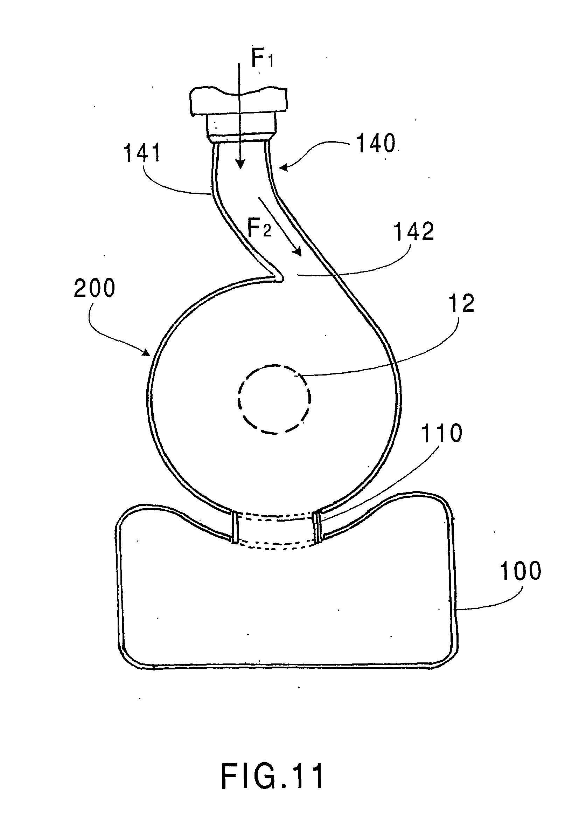

La figure 11 présente une variante additionnelle permettant une meilleure séparation des déchets introduits. En effet, la présente variante se distingue des précédentes par la forme du conduit 140 d'introduction des déchets dans la chambre de séparation 200, conduit qui présente un coude 141. Par un tel coude, on réduit la probabilité pour que certains déchets, à l'entrée du conduit 140, n'aillent directement percuter le filtre central. Ainsi, les déchets, introduits selon la direction F1, sont immanquablement déviés par le coude 141 selon la direction F2 et subissent alors la force centrifuge.

Par ailleurs, le bac 100 de récupération des déchets est éloigné de la chambre 200 par un conduit 110 de longueur faible mais significative, piégeant en quelque sorte les déchets et évitant que l'air ne s'engouffre dans le bac 100, tel qu'il a précédemment été expliqué.

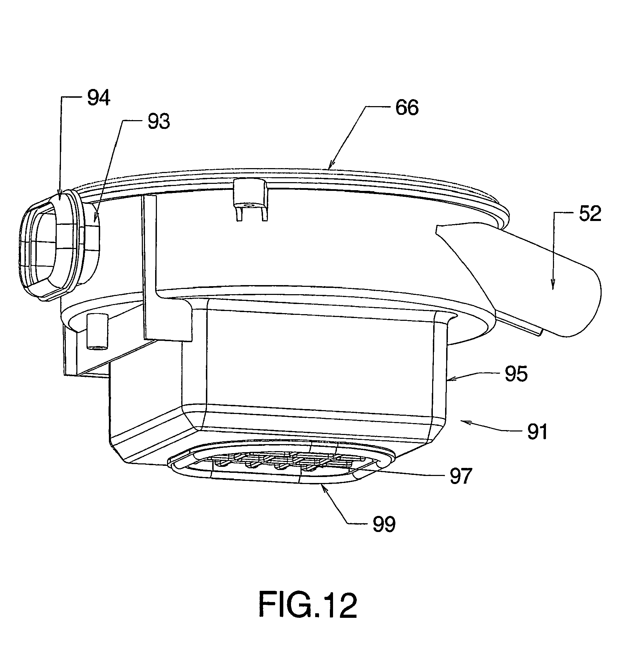

La figure 12 présente une version avantageuse de réalisation de l'invention qui diffère de celle présentée aux figures 8 et 9 essentiellement par la disposition des éléments.

Ainsi, le conduit 52 d'entrée d'air du dispositif 91 de séparation des déchets débouche dans une chambre de séparation s'apparentant à un tore en disposant d'une paroi circulaire interne formée d'une grille circulaire. Cette chambre comporte par ailleurs une paroi de fond ainsi qu'un couvercle 66. Un conduit 93 tel que précédemment décrit mène à un bac, non représenté, de collecte des déchets séparés. Un joint 94 permet d'assurer l'étanchéité avec le bac.

Selon cette variante, le filtre situé après la séparation des déchets dans la chambre, tel le filtre 70 des figures 8 et 9, n'est pas situé à l'intérieur de la chambre, mais sous celle-ci, dans un boîtier 95 en communication aéraulique avec, d'une part la chambre de séparation, et d'autre part le moteur, par une grille 97. Un joint d'étanchéité 99 assure la liaison avec le moteur.

Par cette disposition, il est possible de réduire, comparativement à l'architecture présentée figure 8 et 9, le diamètre de la chambre de séparation. De plus, cette configuration permet d'avoir plus de latitude quant au dimensionnement du filtre.

Ce mode de mise en oeuvre de l'invention présente également l'avantage de clairement mettre en évidence la faible hauteur de la chambre de séparation par rapport au conduit 52 d'entrée des déchets. La section de la chambre de séparation reste dans un rapport de 0,6 à 2,4 fois la plus petite section d'amenée des déchets depuis le suceur.

Afin d'augmenter la vitesse d'entrée des déchets dans la chambre de séparation, on peut réduire localement la section du conduit d'amenée des déchets. Tel qu'illustré figure 11, le conduit 140 présente un tremplin 142 à son extrémité en liaison avec la chambre de séparation, permettant, par la réduction de section, d'augmenter la vitesse et d'améliorer la séparation des déchets dans la chambre.

La présente invention offre donc un système éminemment compact sans altérer la qualité de filtration qui nécessite des vitesses d'air élevées.

Cette qualité est essentiellement réalisée par le maintien d'une vitesse importante dans la chambre de séparation, notamment par des valeurs faibles, d'une part de la section de passage de l'air dans la chambre de séparation, et d'autre part de la section d'entrée d'air 52.

## Revendications

1. Dispositif principal de séparation et de collecte des déchets entraînés par un flux d'air généré par un groupe d'aspiration d'un aspirateur, ledit dispositif comprenant un conduit d'entrée d'air (4, 33, 52, 140) débouchant selon une direction tangentielle dans une chambre de séparation (2, 20, 31, 53, 200) des déchets définissant un volume interne ayant sensiblement la forme d'un cylindre, dans la partie centrale de ladite chambre (2, 20, 31, 53, 200) est agencée au moins une ouverture (11, 38a, 38b, 61, 63) débouchant sur un conduit en liaison avec le groupe d'aspiration, ladite chambre (2, 20, 31, 53, 200) possédant un canal (8, 40, 68, 110) d'évacuation des déchets selon une direction radiale, ledit canal (8, 40, 68, 110) étant relié à un bac étanche (10, 37, 76, 100) collecteur des déchets centrifugés, le canal d'entrée d'air (4, 33, 52, 140) et le canal (8, 40, 68, 110) d'évacuation des déchets étant agencés sensiblement à la même hauteur dans la chambre de séparation (2, 20, 31, 53, 200) des déchets, **caractérisé en ce que** la section diamétrale de la chambre (2, 20, 31, 53, 200) est comprise entre deux fois et dix fois la plus petite section des canaux d'amenée des déchets depuis le suceur.

2. Dispositif principal de séparation et de collecte des déchets selon la revendication précédente, **caractérisé en ce que** au moins un moyen de filtration (12, 67, 70, 120,121,122) est disposé dans la partie centrale de la chambre (2, 20, 31, 53, 200) et sépare le volume interne de ladite chambre de l'ouverture (11, 38a, 38b, 61, 63) en liaison avec le groupe d'aspiration.

3. Dispositif principal de séparation et de collecte des déchets selon l'une des revendications précédentes, **caractérisé en ce que** l'extrémité du canal (8, 40, 68, 110) d'évacuation des déchets reliée à la chambre de séparation est de hauteur sensiblement égale à celle de la chambre (2, 20, 31, 53, 200).

4. Dispositif principal de séparation et de collecte des déchets selon l'une des revendications précédentes, **caractérisé en ce que** la section du conduit d'entrée (4, 33, 52, 140) est sensiblement circulaire et de diamètre compris entre 25 mm et 35 mm.

5. Dispositif principal de séparation et de collecte des déchets selon la revendication précédente, **caractérisé en ce que** le conduit d'entrée (4, 33, 52, 140) possède une réduction de sa section au niveau de sa liaison aéraulique avec la chambre de séparation (2, 20, 31, 53, 200).

6. Dispositif principal de séparation et de collecte des déchets selon l'une des revendications précédentes, **caractérisé en ce que** la section du canal d'entrée d'air est comprise entre 1 et 2 fois la plus petite section d'amenée des déchets depuis le suceur d'aspiration.

7. Dispositif principal de séparation et de collecte des déchets selon l'une des revendications 2 à 6, **caractérisé en ce que** au moins l'un des moyens de filtration (12) est plat.

8. Dispositif principal de séparation et de collecte des déchets selon l'une des revendications 2 à 6, **caractérisé en ce que** au moins l'un des moyens de filtration (120) est hémisphérique.

9. Dispositif principal de séparation et de collecte des déchets selon l'une des revendications 2 à 8, **caractérisé en ce que** deux moyens de filtration (120, 121) sont disposés en vis-à-vis, en relation avec un ou deux conduit(s) (14, 15) lié(s) au groupe d'aspiration principal.

10. Dispositif principal de séparation et de collecte des déchets selon l'une des revendications 2 à 6, **caractérisé en ce que** au moins un moyen de filtration (122) est cylindrique.

11. Dispositif principal de séparation et de collecte des déchets selon la revendication précédente, **caractérisé en ce que** le moyen de filtration cylindrique (122) s'étend depuis le fond de la chambre de séparation (2, 20, 31, 200) jusqu'à la partie supérieure de ladite chambre.

12. Dispositif principal de séparation et de collecte des déchets selon l'une des revendications 1 à 6, **caractérisé en ce que** la chambre cylindrique de séparation (53) est sous la forme d'un tore dont la face cylindrique intérieure (55) comporte une ouverture (61) débouchant sur un conduit en liaison avec un groupe d'aspiration.

13. Dispositif principal de séparation et de collecte des déchets selon la revendication précédente, **caractérisé en ce que** un moyen de filtration (67) est disposé au niveau de l'ouverture de la face cylindrique intérieure (55).

14. Dispositif principal de séparation et de collecte des déchets selon l'une des revendications 12 ou 13, **caractérisé en ce que** la section diamétrale (S) du tore est comprise entre une fois et quatre fois la plus petite section des canaux d'amenée des déchets depuis le suceur.

15. Dispositif principal de séparation et de collecte des déchets selon l'une des revendications 12 à 14, **caractérisé en ce que** le moyen de filtration (67) est une grille dont la maille est inférieure à 60 µm.

16. Dispositif principal de séparation et de collecte des déchets selon l'une des revendications 12 à 15, **caractérisé en ce que** la face cylindrique intérieure est prolongée au-delà de la hauteur (h) de la chambre de séparation (53), le cylindre ainsi **caractérisé** étant fermé par des parois sensiblement horizontales (60, 66), définissant un volume à l'intérieur duquel est logé un second moyen de filtration (70) en liaison avec le groupe d'aspiration principal.

17. Dispositif principal de séparation et de collecte des déchets selon la revendication précédente, **caractérisé en ce que** le second moyen de filtration (70) est un filtre cylindrique s'étendant sur sensiblement toute la hauteur (k) du cylindre.

18. Dispositif principal de séparation et de collecte des déchets selon l'une des revendications 12 à 15, **caractérisé en ce qu'**il dispose d'un second moyen de filtration sous la forme d'un filtre disposé dans un logement (95) situé sous la chambre de séparation et en communication aéraulique avec celle-ci.

19. Dispositif principal de séparation et de collecte des déchets selon l'une des revendications 16 à 18, **caractérisé en ce que** le second moyen de filtration présente une surface supérieure à 0,2 m².

20. Dispositif principal de séparation et de collecte des déchets selon la revendication précédente, **caractérisé en ce que** le second moyen de filtration est un filtre plissé.

21. Dispositif principal de séparation et de collecte des déchets selon l'une des revendications précédentes, **caractérisé en ce que** au moins l'un des moyens de filtration (12, 67, 70, 120,121,122) peut être régénéré.

22. Dispositif principal de séparation et de collecte des déchets selon la revendication précédente, **caractérisé en ce que** le moyen de filtration (12, 67, 70, 120,121,122) pouvant être régénéré est constitué d'un support fibreux recouvert d'une membrane poreuse en PTFE.

## Claims

1. A main device for separating and collecting waste entrained by a flow of air generated by a suction unit of a vacuum cleaner, said device comprising an air inlet duct (4, 33, 52, 140) opening out in a tangential direction into a waste separator chamber (2, 20, 31, 53, 200) defining an internal volume that is substantially cylindrical in shape, at least one opening (11, 38a, 38b, 61, 63) being arranged in the central portion of said chamber (2, 20, 31, 53, 200) and leading to a duct in communication with the suction unit, said chamber (2, 20, 31, 53, 200) possessing a channel (8, 40, 68, 110) for removing waste in a radial direction, said channel (8, 40, 68, 110) being connected to a leaktight receiver (10, 37, 76, 100) for collecting the centrifuged waste, the air inlet channel (4, 33, 52, 140) and the waste removal channel (8, 40, 68, 110) being arranged substantially at the same height in the waste separator chamber (2, 20, 31, 53, 200), the device being **characterized in that** the diametral section of the chamber (2, 20, 31, 53, 200) lies in the range twice to ten times the smallest section of the channels for bringing waste from the nozzle.

2. A main device for separating and collecting waste according to the preceding claim, **characterized in that** at least one filter means (12, 67, 70, 120, 121, 122) is disposed in the central portion of the chamber (2, 20, 31, 53, 200) and separates the internal volume of said chamber from the opening (11, 38a, 38b, 61, 63) in communication with the suction unit.

3. A main waste separator and collector device according to either preceding claim, **characterized in that** the end of the waste removal channel (8, 40, 68, 110) connected to the separator chamber is of a height substantially equal to the height of the chamber (2, 20, 31, 53, 200).

4. A main waste separator and collector device according to any preceding claim, **characterized in that** the section of the inlet duct (4, 33, 52, 140) is substantially circular and of diameter lying in the range 25 mm to 35 mm.

5. A main waste separator and collector device according to any preceding claim, **characterized in that** the inlet duct (4, 33, 52, 140) possesses a reduction in its section at its air flow connection with the separator chamber (2, 20, 31, 53, 200).

6. A main waste separator and collector device according to any preceding claim, **characterized in that** the section of the air inlet channel lies in the range once to half the smallest section for bringing waste from the suction nozzle.

7. A main waste separator and collector device according to any one of claims 2 to 6, **characterized in that** at least one of the filter means (12) is flat.

8. A main waste separator and collector device according to any one of claims 2 to 6, **characterized in that** at least one of the filter means (120) is hemispherical.

9. A main waste separator and collector device according to any one of claims 2 to 8, **characterized in that** two filter means (120, 121) are disposed facing each other in register with one or two ducts (14, 15) connected to the main suction unit.

10. A main waste separator and collector device according to any one of claims 2 to 6, **characterized in that** at least one filter means (122) is cylindrical.

11. A main waste separator and collector device according to the preceding claim, **characterized in that** the cylindrical filter means (122) extend from the bottom of the separator chamber (2, 20, 31, 200) to the top portion of said chamber.

12. A main waste separator and collector device according to any one of claims 1 to 6, **characterized in that** the cylindrical separator chamber (53) is in the form of a torus whose inner cylindrical face (55) includes an opening (61) leading to a duct in communication with a suction unit.

13. A main waste separator and collector device according to the preceding claim, **characterized in that** a filter means (67) is disposed at the opening in the inner cylindrical face (55).

14. A main waste separator and collector device according to claim 12 or claim 13, **characterized in that** the diametral section (S) of the torus lies in the range 1 to 4 times the smallest section of the channels bringing waste from the nozzle.

15. A main waste separator and collector device according to any one of claims 12 to 14, **characterized in that** the filter means (67) is a grid having a mesh size smaller than 60 µm.

16. A main waste separator and collector device according to any one of claims 12 to 15, **characterized in that** the inner cylindrical face is extended beyond the height (h) of the separator chamber (53), the resulting cylinder being closed by substantially horizontal walls (60, 66) defining a volume in which there is housed a second filter means (70) in communication with the main suction unit.

17. A main waste separator and collector device according to the preceding claim, **characterized in that** the second filter means (70) is a cylindrical filter extending over substantially the entire height (k) of the cylinder.

18. A main waste separator and collector device according to any one of claims 12 to 15, **characterized in that** it includes a second filter means in the form of a filter placed in a housing (95) situated under the separator chamber and in air flow communication therewith.

19. A main waste separator and collector device according to any one of claims 16 to 18, **characterized in that** the second filter means presents an area greater than 0.2 m².

20. A main waste separator and collector device according to the preceding claim, **characterized in that** the second filter means is a folded filter.

21. A main waste separator and collector device according to any preceding claim, **characterized in that** at least one of the filter means (12, 67, 70, 120, 121, 122) is capable of being regenerated.

22. A main waste separator and collector device according to the preceding claim, **characterized in that** the filter means (12, 67, 70, 120, 121, 122) that is capable of being regenerated is constituted by a fibrous support covered by a porous membrane of PTFE.

## Patentansprüche

1. Hauptvorrichtung zum Trennen und Auffangen der Abfälle, die von einem Luftstrom mitgenommen werden, der von einer Ansauggruppe eines Staubsaugers erzeugt wird, wobei die Vorrichtung eine Lufteinlassleitung (4, 33, 52, 140) aufweist, die gemäß einer Tangentialrichtung in eine Kammer (2, 20, 31, 53, 200) zur Trennung der Abfälle mündet, welche ein im Wesentlichen zylinderförmiges Innenvolumen begrenzt, wobei im mittleren Teil der Kammer (2, 20, 31, 53, 200) mindestens eine Öffnung (11, 38a, 38b, 61, 63) ausgebildet ist, die in eine mit der Ansauggruppe verbundene Leitung mündet, wobei die Kammer (2, 20, 31, 53, 200) einen Kanal (8, 40, 68, 110) zum Abführen der Abfälle in radialer Richtung aufweist, wobei der Kanal (8, 40, 68, 110) mit einem dichten Behälter (10, 37, 76, 100) zum Auffangen der ausgeschleuderten Abfälle verbunden ist, wobei der Lufteinlasskanal (4, 33, 52, 140) und der Kanal (8, 40, 68, 110) zum Abführen der Abfälle in der Kammer (2, 20, 31, 53, 200) zur Trennung der Abfälle im Wesentlichen auf gleicher Höhe angeordnet sind, **dadurch gekennzeichnet, dass** der diametrale Querschnitt der Kammer (2, 20, 31, 53, 200) zwischen zwei- und zehnmal so groß ist wie der kleinste Querschnitt der Kanäle zum Zuführen der Abfälle aus der Saugvorrichtung.

2. Hauptvorrichtung zum Trennen und Auffangen der Abfälle nach dem vorhergehenden Anspruch, **dadurch gekennzeichnet, dass** mindestens ein Filtriermittel (12, 67, 70, 120, 121, 122) im mittleren Teil der Kammer (2, 20, 31, 53, 200) angeordnet ist und das Innenvolumen der Kammer von der mit der Ansauggruppe verbundenen Öffnung (11, 38a, 38b, 61, 63) trennt.

3. Hauptvorrichtung zum Trennen und Auffangen der Abfälle nach einem der vorhergehenden Ansprüche, **dadurch gekennzeichnet, dass** die Höhe des mit der Trennkammer verbundenen Endes des Kanals (8, 40, 68, 110) zum Abführen der Abfälle im Wesentlichen der Höhe der Kammer (2, 20, 31, 53, 200) entspricht.

4. Hauptvorrichtung zum Trennen und Auffangen der Abfälle nach einem der vorhergehenden Ansprüche, **dadurch gekennzeichnet, dass** der Querschnitt der Einlassleitung (4, 33, 52, 140) im Wesentlichen kreisförmig ist und einen Durchmesser besitzt, der zwischen 25 mm und 35 mm beträgt.

5. Hauptvorrichtung zum Trennen und Auffangen der Abfälle nach dem vorhergehenden Anspruch, **dadurch gekennzeichnet, dass** die Einlassleitung (4, 33, 52, 140) an ihrer Luftverbindung mit der Trennkammer (2, 20, 31, 53, 200) einen verringerten Querschnitt besitzt.

6. Hauptvorrichtung zum Trennen und Auffangen der Abfälle nach einem der vorhergehenden Ansprüche, **dadurch gekennzeichnet, dass** der Querschnitt des Lufteinlasskanals zwischen ein- und zweimal so groß ist wie der kleinste Querschnitt zur Zuführung der Abfälle aus der Ansaugvorrichtung.

7. Hauptvorrichtung zum Trennen und Auffangen der Abfälle nach einem der Ansprüche 2 bis 6, **dadurch gekennzeichnet, dass** mindestens eines der Filtriermittel (12) flach ist.

8. Hauptvorrichtung zum Trennen und Auffangen der Abfälle nach einem der Ansprüche 2 bis 6, **dadurch gekennzeichnet, dass** mindestens eines der Filtriermittel (120) halbkugelförmig ist.

9. Hauptvorrichtung zum Trennen und Auffangen der Abfälle nach einem der Ansprüche 2 bis 8, **dadurch gekennzeichnet, dass** zwei Filtriermittel (120, 121) einander gegenüber angeordnet und mit einer oder zwei mit der Hauptansauggruppe verbundenen Leitung(en) (14, 15) verbunden sind.

10. Hauptvorrichtung zum Trennen und Auffangen der Abfälle nach einem der Ansprüche 2 bis 6, **dadurch gekennzeichnet, dass** mindestens ein Filtriermittel (122) zylindrisch ist.

11. Hauptvorrichtung zum Trennen und Auffangen der Abfälle nach dem vorhergehenden Anspruch, **dadurch gekennzeichnet, dass** das zylindrische Filtriermittel (122) sich vom Boden der Trennkammer (2, 20, 31, 200) bis zum oberen Teil der Kammer erstreckt.

12. Hauptvorrichtung zum Trennen und Auffangen der Abfälle nach einem der Ansprüche 1 bis 6, **dadurch gekennzeichnet, dass** die zylindrische Trennkammer (53) als Torus ausgebildet ist, dessen zylindrische Innenfläche (55) eine Öffnung (61) aufweist, die in eine mit einer Ansauggruppe verbundene Leitung mündet.

13. Hauptvorrichtung zum Trennen und Auffangen der Abfälle nach dem vorhergehenden Anspruch, **dadurch gekennzeichnet, dass** auf Höhe der Öffnung der zylindrischen Innenfläche (55) ein Filtriermittel (67) angeordnet ist.

14. Hauptvorrichtung zum Trennen und Auffangen der Abfälle nach Anspruch 12 oder Anspruch 13, **dadurch gekennzeichnet, dass** der diametrale Querschnitt (S) des Torus zwischen ein- und viermal so groß ist wie der kleinste Querschnitt der Kanäle zum Zuführen der Abfälle aus der Saugvorrichtung.

15. Hauptvorrichtung zum Trennen und Auffangen der Abfälle nach einem der Ansprüche 12 bis 14, **dadurch gekennzeichnet, dass** das Filtriermittel (67) ein Gitter ist, dessen Maschen weniger als 60 µm betragen.

16. Hauptvorrichtung zum Trennen und Auffangen der Abfälle nach einem der Ansprüche 12 bis 15, **dadurch gekennzeichnet, dass** die zylindrische Innenfläche jenseits der Höhe (h) der Trennkammer (53) verlängert ist, wobei der so **gekennzeichnet**e Zylinder durch im Wesentlichen horizontale Wände (60, 66) verschlossen ist, wobei ein Volumen definiert ist, in dem ein zweites, mit der Hauptansauggruppe verbundenes Filtriermittel (70) aufgenommen ist.

17. Hauptvorrichtung zum Trennen und Auffangen der Abfälle nach dem vorhergehenden Anspruch, **dadurch gekennzeichnet, dass** das zweite Filtriermittel (70) ein zylindrischer Filter ist, der sich im Wesentlichen über die gesamte Höhe (k) des Zylinders erstreckt.

18. Hauptvorrichtung zum Trennen und Auffangen der Abfälle nach einem der Ansprüche 12 bis 15, **dadurch gekennzeichnet, dass** sie über ein zweites Filtriermittel verfügt, das als Filter ausgebildet ist, der in einer Aufnahme (95) angeordnet ist, welche sich unter der Trennkammer befindet und mit dieser in Luftverbindung steht.

19. Hauptvorrichtung zum Trennen und Auffangen der Abfälle nach einem der Ansprüche 16 bis 18, **dadurch gekennzeichnet, dass** das zweite Filtriermittel eine Oberfläche aufweist, die mehr als 0,2 m² beträgt.

20. Hauptvorrichtung zum Trennen und Auffangen der Abfälle nach dem vorhergehenden Anspruch, **dadurch gekennzeichnet, dass** das zweite Filtriermittel ein Faltenfilter ist.

21. Hauptvorrichtung zum Trennen und Auffangen der Abfälle nach einem der vorhergehenden Ansprüche, **dadurch gekennzeichnet, dass** mindestens eines der Filtriermittel (12, 67, 70, 120, 121, 122) regeneriert werden kann.

22. Hauptvorrichtung zum Trennen und Auffangen der Abfälle nach dem vorhergehenden Anspruch, **dadurch gekennzeichnet, dass** das Filtriermittel (12, 67, 70, 120, 121, 122), das regeneriert werden kann, aus einem fasrigen Träger besteht, der mit einer porösen Membran aus PTFE bedeckt ist.
